# EUROPEAN PATENT SPECIFICATION

(11) **EP 2 862 159 B1**
(45) Date of publication and mention of the grant of the patent: **05.08.2020**
(21) Application number: 13804370.8
(22) Date of filing: 12.06.2013
(51) Int. Cl.: G08G 1/16, B60W 30/16, G05D 1/02, B60W 30/165, G08G 1/00, B60W 30/18

(54) **SYSTEM AND METHOD FOR ASSISTING A VEHICLE WHEN OVERTAKING A VEHICLE TRAIN**
SYSTEM UND VERFAHREN ZUR UNTERSTÜTZUNG EINES FAHRZEUGS BEIM ÜBERHOLEN EINES WAGENVERBUNDES
SYSTÈME ET PROCÉDÉ D'ASSISTANCE À UN VÉHICULE LORS DU DÉPASSEMENT D'UN TRAIN DE VÉHICULES

(30) Priority: 14.06.2012 SE 1250627
(43) Date of publication of application: 22.04.2015
(73) Proprietor: Scania CV AB, 151 87 Södertälje (SE)
(72) Inventor: KEMPPAINEN, Josefin, S-126 35 Hägersten (SE); NILSSON, Sanna, S-783 34 Säter (SE); PETTERSSON, Hanna, S-713 92 Gyttorp (SE); AL ALAM, Assad, S-121 31 Enskededalen (SE); PETTERSSON, Henrik, S-141 73 Segeltorp (SE)
(74) Representative: Scania CV AB
(86) International application number: PCT/SE2013/050674
(87) International publication number: WO 2013/187835

(56) References cited:
- EP-A1- 1 457 947
- EP-A2- 1 569 183
- WO-A1-2011/003658
- WO-A1-2012/014040
- WO-A2-2008/008404
- CN-A- 101 707 006
- DE-A1- 10 109 046
- DE-A1- 10 109 052
- DE-A1-102008 040 566
- US-A1- 2012 095 641

## Description

### Field of the invention

The present invention relates to techniques in the context of vehicle trains, and in particular to a system and a method for assisting a vehicle when overtaking a vehicle train according to the preambles of the independent claims.

### Background to the invention

The already high traffic volume on Europe's major roads is expected to increase still further. The energy required for carrying freight on these roads is also enormous and growing. A possible contribution to solving these problems is to have trucks travel close together in so-called vehicle trains ("platoons"). Travelling close together in a vehicle train considerably lowers the air resistance to trucks, reduces their energy requirements and uses the transport system more efficiently. Vehicle train means here a number of vehicles travelling with close spacing between them and as a unit. Studies have shown that the fuel consumption of a train's leading vehicle may be reduced by 2-10% and that of the following vehicle by 15-20%, as compared with a lone vehicle. These figures are based on the distance between the trucks being 8-16 metres and on travelling at 80 km/h. The lower fuel consumption means a corresponding reduction in CO₂ emissions.

These well-known facts are currently already being put to advantage by drivers, with consequently lowered traffic safety. A fundamental issue concerning vehicle trains is how to reduce the time gap between vehicles from a recommended 3 seconds to between 0.5 and 1 second without affecting traffic safety. The recommended time gap is currently based on
- driver reaction time
- delays in vehicle brake systems
- vehicle stopping distances

Driver reaction time can be eliminated by using distance sensors and cameras, ACC (adaptive cruise control) and LKA (lane keeping assistance) being examples of techniques already employed today. There is however a limitation in that distance sensors and cameras need a clear view of the target, making it difficult to detect what is happening more than a couple of vehicles ahead in the queue. A further limitation is that they cannot react proactively, i.e. react to occurrences which have had no marked effect on the pace of traffic.

A development of IEEE standard 802.11 for WLAN (wireless local area networks) called 802.11p allows wireless transmission of information between vehicles, and between vehicles and infrastructures. Various kinds of information may be sent to and from the vehicles, e.g. vehicle parameters and strategies. A vehicle ahead in a train may thus for example
- send information about its own state, i.e. weight, speed, power output, location etc.,
- send information about forms of action which affect nearby traffic, e.g. braking,
- acting as a probe for vehicles behind by passing reports about traffic occurrences rearwards in the vehicle train.

This access to information makes it possible to create new functions, e.g. for helping drivers to drive more efficiently and more safely. The development of communication techniques has made it possible to design trucks and infrastructures which support the use of vehicle trains. A vehicle train can operate as a unit, thereby damping fluctuations in the train caused by speed changes and consequently allowing closer spacing and better overall traffic flow.

The creation of vehicle trains does however give rise to other kinds of problems. If a car travelling behind a vehicle train wishes to overtake, there needs to be assurance of a high degree of safety. The vehicle train may be long and the road may have only one traffic lane, potentially resulting in hazardous situations by making it difficult for the car driver to monitor traffic ahead of the vehicle train.

EP-2434468-A1 describes a system for assisting a vehicle during overtaking. The system estimates the average speed of the vehicles at a given distance ahead, and how far away from each other they will then be. A prospective recommendation about overtaking may then be produced.

EP-2169649-B1 describes a method for giving a driver a recommendation not to overtake if route information from a first vehicle indicates that it intends to turn off from the current road within a number of seconds.

WO-2011/003658-A1 describes a device for assisting a manoeuvre for guiding a vehicle into a gap, particularly when switching to a traffic lane between two vehicles. Vehicle-to-vehicle communication may be used.

US-2012/0095641-A1 describes a method for wireless communication between vehicles whereby a first vehicle identifies a second vehicle ahead. The second vehicle sends running information wirelessly to the first vehicle, which then processes the information to check whether it is possible to overtake the second vehicle safely.

WO 2008/008404 A2 describes a method for wireless communication between a front and a rear vehicle for checking whether it is possible for the rear vehicle to overtake the front vehicle safely.

The techniques described above do not cover cases where a vehicle wishes to pass a vehicle train. The object of the invention is therefore to propose a system which assists a driver wishing to overtake a vehicle train.

### Summary of the invention

The object described above is achieved by a system for assisting a vehicle travelling behind a vehicle train to overtake it according to the first independent claim. The vehicle behind and at least a leader vehicle in the train are adapted to communicating via wireless communication. The system comprises a processor unit adapted to receiving from said vehicle behind an overtake signal which indicates that it wishes to overtake the vehicle train. The processor unit is also adapted to receiving from a monitoring system on board the leader vehicle at least one monitoring signal which indicates the presence of objects around the leader vehicle which relate to the traffic situation. The processor unit analyses the presence of objects with respect to predetermined criteria related to the possibility of the vehicle behind overtaking safely, and generates an assistance signal which indicates the result of the analysis. The processor unit is then adapted to sending the assistance signal to said vehicle behind so that the result of the analysis is conveyed to its driver. Said analysis serves as a basis for generating one or more control signals which indicate how one or more vehicles in the train need to be regulated to make it possible for said vehicle behind to overtake. The processor unit is also adapted to sending said one or more control signals to one or more control systems on board said vehicles in the train, which vehicle or vehicles are then regulated accordingly.

Another aspect achieves the object described above by a method for assisting a vehicle behind when overtaking a vehicle train according to the second independent claim.

Vehicles such as cars should not have to travel behind a vehicle train which is moving at a speed below the prevailing speed limits. Depending on the scale of the vehicle train, however, it may be difficult for the driver of a vehicle behind to form an opinion about whether and when it is possible to overtake. Using the overtaking assistance will thus facilitate overtaking by vehicles wishing to overtake. Traffic stacking caused by vehicle trains may also be avoided. The system and method described for assisting a vehicle behind make it possible to regulate the vehicles in the train so that the vehicle behind can overtake, e.g. by successive vehicles in the train one at a time leaving gaps into which the vehicle behind can move. It is also possible to regulate the train's vehicles in such a way that a vehicle behind can overtake two or more of them at a time. The train's leader vehicle continuously investigates the situation along the road ahead to see whether there are objects which prevent overtaking.

Information from vehicles within a vehicle train may be used to achieve a combination of centralised and decentralised regulation. This type of wireless information system comprises inter alia radio communication, WLAN etc. A relevant technology in this context is the new WLAN standard IEEE 801.11p added to IEEE 802.11 to make wireless communication possible within a vehicle environment (WAVE). This protocol specifies further requirements for being able to support intelligent transport system (ITS) applications, involving data exchange between vehicles and between infrastructures and vehicles within the licensed 5.9 GHz (5.85 - 5.925 GHz) frequency band.

Vehicle behind means a vehicle which is behind the leader vehicle in a vehicle train. The leader vehicle is the vehicle furthest forward in the train's direction of travel.

Preferred embodiments are described in the dependent claims and the detailed description.

### Brief description of the attached drawings

The invention is described below with reference to the attached drawings, in which:
Figure 1 illustrates a system for assisting a vehicle behind when overtaking a vehicle train according to an embodiment of the invention.
Figures 2A-2D illustrate how a vehicle behind interacts with a vehicle train in order to be able to overtake according to an embodiment of the invention.
Figure 3 is a flowchart for assisting a vehicle behind when overtaking a vehicle train according to an embodiment of the invention.

### Detailed description of preferred embodiments of the invention

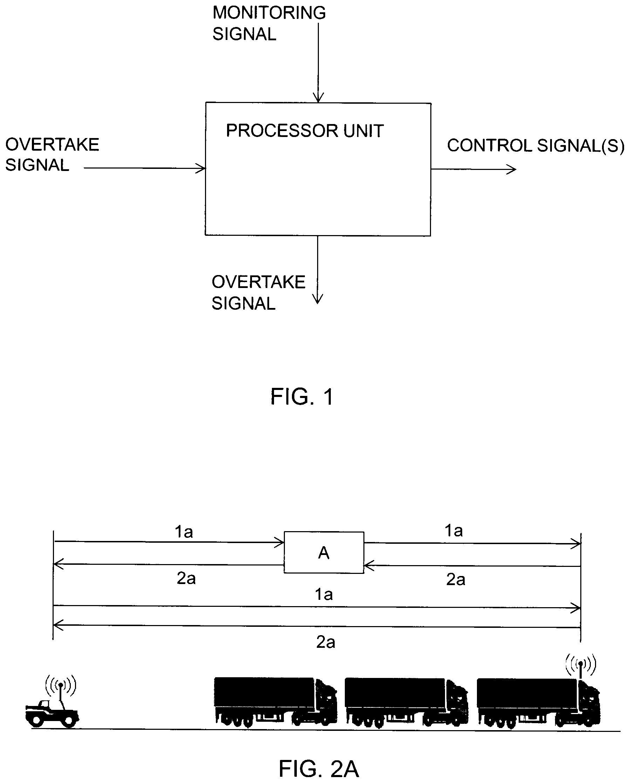

Figure 1 depicts a system for assisting a vehicle behind when overtaking a vehicle train, as will be now be explained with reference to this diagram. The vehicle train comprises at least two vehicles travelling close together. The vehicle behind and at least the train's leader vehicle are adapted to communicating via wireless communication. In one embodiment all of the train's vehicles are adapted to communicating by wireless communication, either directly with one another or through one or more roadside units. The general purpose of vehicle trains is to keep the vehicles as close to one another as possible by regulating their cruise controls and brake systems in order to take advantage of positive effects such as reduced air resistance.

By vehicle-to-vehicle communication (V2V communication), information may be obtained wirelessly from nearby vehicles. To this end, the vehicles are provided with units adapted to receiving and sending information wirelessly. A further way of communicating is via vehicle-to-infrastructure communication (V2I communication) whereby vehicles can exchange information wirelessly with, for example, roadside units with built-in intelligence.

The system comprises a processor unit which may for example be on board the leader vehicle. In one embodiment each of the train's vehicles has a processor unit according to the invention. The processor unit is connected to the vehicle's internal network, e.g. CAN (controller area network), and has access to signals distributed via the network. Signals sent from other vehicles via wireless communication, e.g. WiFi, are also received via the network. The wireless communication is preferably tagged with the identity of the vehicle from which it comes. If the vehicle is part of a train, the communication from it also has, in one embodiment, an identity which indicates that it belongs to the train.

The driver of the vehicle behind preferably initiates the process of overtaking the vehicle train. In one embodiment the vehicle behind has a unit which receives wireless signals sent out from the train and identifies from the identity of the communication that there is a vehicle train ahead. This information may be conveyed to the driver of the vehicle behind, who can then decide whether he/she wishes to overtake the vehicle train. The driver then initiates the wish to overtake by transmitting a wireless overtake signal to the train. The processor unit is adapted to receiving from the vehicle behind the overtake signal which thus indicates that the vehicle behind wishes to overtake the train. For example, the processor unit may receive the overtake signal by taking it from the vehicle's network. The overtake signal indicates in one embodiment an identity of the vehicle behind. In another embodiment it also contains information about the vehicle which wishes to overtake, e.g. its length, power output, weight and/or model. The analysis done by the processor unit may thus take vehicle-specific parameters into account.

The unit in the vehicle behind may for example be built into the vehicle and may have the functionality implemented in it, e.g. in the form of a software application. In another embodiment the unit in the vehicle behind is a mobile unit, e.g. a mobile telephone, and has the functionality implemented in it in the form of a software application.

To be able to decide whether the vehicle train can be overtaken safely, its leader vehicle has to check whether there are vehicles travelling in the opposite direction or other obstacles along the road round and ahead of the leader vehicle which might hinder overtaking. To be able to decide this, the leader vehicle is preferably provided with a monitoring system from which the processor unit is adapted to receiving at least one monitoring signal which indicates the presence of objects around the leader vehicle which relate to the traffic situation. The monitoring system comprises for example radar and/or lidar. Information from radar and/or lidar may be used to calculate the distance, speed and any acceleration of objects identified. Information about objects may also be obtained by wireless communication with other vehicles and roadside units or via GPS (global positioning system). The processor unit is then adapted to analysing the presence of objects with respect to predetermined criteria related to the possibility of the vehicle behind overtaking safely, and to generating an assistance signal which indicates the result of the analysis. The predetermined criteria comprise for example a shortest distance to an identified object and/or a highest speed of an identified object. In another embodiment, the processor unit is also adapted to receiving from other vehicles in the train monitoring signals which indicate the presence of objects around the train which relate to the traffic situation. An example of an object is a vehicle in another traffic lane.

The processor unit is then adapted to sending the assistance signal to the vehicle behind, thereby conveying the result of the analysis to its driver. If an object is identified which is such that overtaking cannot be executed safely, the result of the analysis is that overtaking cannot take place. This may for example be conveyed to the driver via a display by the message "Safe overtaking not possible, wait". If no object is identified to prevent safe overtaking, the result of the analysis is that overtaking can take place. This may for example be conveyed to the driver via a display by the message "Safe overtaking possible". The assistance signal also indicates in one embodiment an identity of the vehicle train. The driver of the vehicle behind thus knows which vehicle train the analysis is concerned with. In another embodiment, the assistance signal indicates how many vehicles are in the train. The driver may thus be informed of how many vehicles there are in the train, enabling him/her to decide for example whether he/she wishes to overtake the whole of the train.

If the system decides that it is possible to overtake safely, the train has to be regulated to make room for the vehicle behind to do so. The processor unit is therefore adapted to using the above analysis as a basis for generating one or more control signals which indicate how one or more of the train's vehicles need to be regulated to make it possible for said vehicle behind to overtake the train. The processor unit may then send said one or more control signals to one or more control systems of the train's vehicles, which vehicle or vehicles are then regulated accordingly. The control units may for example be cruise controls and/or brake systems of the respective vehicles.

If the system decides that it is not possible to overtake safely and that the driver of the vehicle behind should wait, the processor unit of the leader vehicle then preferably monitors the situation to decide when the vehicle behind can overtake safely. When safe overtaking subsequently becomes possible, this is conveyed to the driver of the vehicle behind.

In one embodiment said one or more control signals indicate how one or more of the train's vehicles need to be regulated to provide the vehicle behind with space between two of the train's vehicles. If the train comprises for example two vehicles, i.e. a leader vehicle and a following vehicle, the latter's speed may be lowered to create a gap between it and the leader vehicle. The leader vehicle then generates a control signal which indicates a lower set speed for the second vehicle's cruise control and is sent via wireless communication to the second vehicle, which receives the signal and regulates its speed accordingly. A gap is thus formed, enabling the vehicle behind to overtake the second vehicle and move into the gap. An alternative in this situation is that the set speed of the leader vehicle may instead or in combination be increased to create a gap, subject to not exceeding prevailing speed limits.

In one embodiment the processor unit is adapted to determining a period of time t during which overtaking is assessed as being safe, in which case the assistance signal also states said period t. The driver thus knows for how long the assessment is valid and that there will be no further objects not taken into account in the analysis. The period t may for example be a fixed set time related to the speed of the vehicles: the faster their speed, the shorter the period t. The period t in this embodiment is preferably also conveyed to the driver of the vehicle behind to enable him/her to assess whether it is possible to overtake safely. In another embodiment, the processor unit analyses the traffic situation continuously and assesses whether safe overtaking is feasible, and the driver of the vehicle behind may continually receive updated information about whether it is possible to overtake safely.

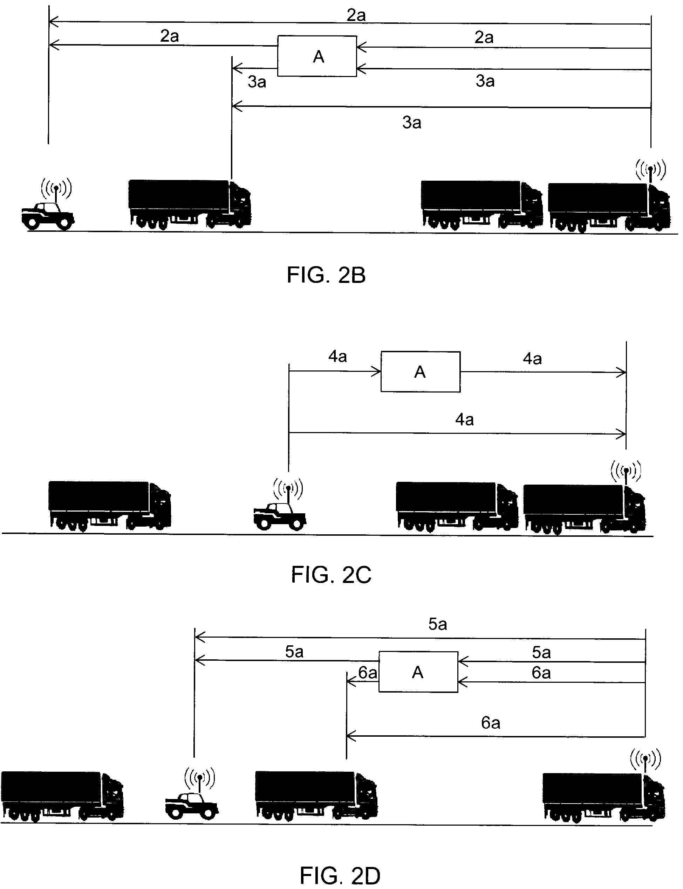

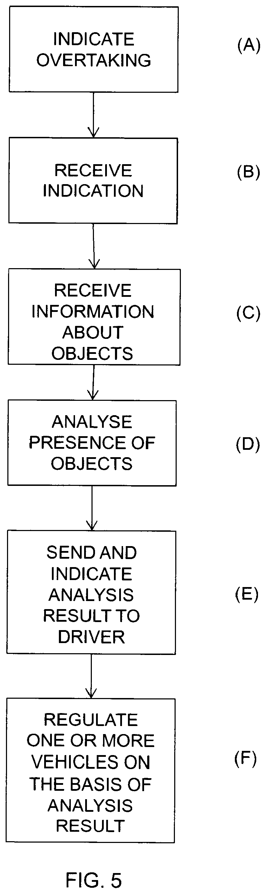

Figures 2A-2D illustrate an overtaking situation in which a vehicle wishes to overtake a vehicle train. In this case there are three vehicles in the train, comprising in front a leader vehicle which exercises control over the train's other vehicles, a middle vehicle and a rear vehicle. The lines in the diagrams illustrate communication paths and the box marked "A" represents a roadside unit. Communication may thus either be via one or more roadside units "A" or by direct communication between the vehicles. Figure 2A shows the vehicle behind sending an overtake signal 1 a to the leader vehicle directly or via a roadside unit "A". A processor unit on board the leader vehicle or another train vehicle or in a roadside unit then does an analysis of the situation as described above and sends an assistance signal 2a back to the vehicle behind either directly or via a roadside unit "A". If the system assesses that the overtaking vehicle can overtake safely, one or more control signals are generated and conveyed to the train's last vehicle, these signals being represented by communication 3a in Figure 2B. The control signal or signals indicate a lowered set speed and are received by the vehicle's cruise control, whereupon the vehicle's speed is regulated accordingly. A gap then occurs in front of the train's rear vehicle. During the time when the rear vehicle is regulated so that a gap occurs in front of it, there is in one embodiment continuous updating of the status of the overtaking situation by at least the leader vehicle monitoring the surroundings as previously explained and sending the result of the analysis to the vehicle behind. This is represented by communication 2a in Figure 2B. The vehicle behind then overtakes the train's rear vehicle and moves into the gap in front of it as illustrated in Figure 2C. As the vehicle behind wishes to continue to overtake the vehicle train, it sends to the vehicle train another overtake signal represented by communication 4a in Figure 2C. Figure 2D shows the leader vehicle sending an assistance signal 5a back to the vehicle behind and also sending control signals 6a to the train's middle vehicle to regulate its set speed so that a gap can occur between it and the leader vehicle. The vehicle behind can then overtake the middle vehicle and move into the resulting gap as illustrated in Figure 2D. In a similar way the vehicle behind may then also overtake the leader vehicle. In one embodiment the processor unit watches over the position and/or ranking of the vehicle behind in the vehicle train, to be able to know which vehicle to send control signals to in order to create a gap which the vehicle behind can move into.

The invention comprises also a method for assisting a vehicle behind when overtaking a vehicle train, which method is illustrated by the flowchart in Figure 3. As in the case of the system, the vehicle behind and at least a leader vehicle in the vehicle train are adapted to communicating via wireless communication. The method comprises first steps of A) indicating that a vehicle behind wishes to overtake the vehicle train, and B) receiving an indication that said vehicle behind wishes to overtake the vehicle train. The indication comes preferably from the vehicle behind described in relation to the system. As a third step C) information about the presence of objects around the leader vehicle which relate to the traffic situation is received and is then analysed as a fourth step D) with respect to predetermined criteria related to the possibility of the vehicle behind overtaking safely. As a fifth step E) the result of the analysis is sent to the vehicle behind, thereby conveying the result to its driver. As a sixth step F) one or more of the train's vehicles are regulated on the basis of the result of the analysis to make it possible for the vehicle behind to overtake the train. A vehicle behind may thus be provided with assistance to overtake a vehicle train safely. The method may be repeated until the vehicle behind has overtaken the whole of the train.

The method in one embodiment comprises regulating one or more of the train's vehicles to provide space between two of them for the vehicle behind. The vehicle behind may thus overtake one train vehicle at a time.

The description of the system referred to examples of identification which are also applicable to the method. In one embodiment the method thus comprises identifying the vehicle train for the vehicle behind. Communications from the train are then tagged with its identity and the vehicle behind is made aware that there is a vehicle train ahead. Identifying the train to the vehicle behind thus involves a unit on board the vehicle behind receiving communication from the train and registering that it comes from a vehicle train. This information may for example be conveyed to the driver who is made aware of the vehicle train. In one embodiment the method comprises identifying the vehicle behind to the train. The train may thus know what vehicle wishes to overtake and ascertain its location etc.

The method comprises in one embodiment determining a period of time t during which overtaking is assessed as being safe, said period t being conveyed to the driver. He/she may thus learn for how long the analysis is valid.

The invention comprises also a computer programme product comprising computer programme instructions for enabling a computer system to perform steps according to the method described above when the programme instructions are run on said computer system. In one embodiment the instructions are stored on a medium which can be read by a computer system.

The present invention is not restricted to the embodiments described above. The aforesaid embodiments therefore do not limit the invention's scope, which is defined by the attached claims.

## Claims

1. A system for assisting a vehicle behind when overtaking a vehicle train comprising at least two vehicles travelling close together, the vehicle behind and at least a leader vehicle in the train being adapted to communicating via wireless communication, which system comprises a processor unit adapted to
- receiving from said vehicle behind an overtake signal which indicates that the vehicle behind wishes to overtake the vehicle train,
- receiving from a monitoring system on board the leader vehicle a monitoring signal which indicates the presence of objects around the leader vehicle which relate to the traffic situation,
- analysing said presence of objects with respect to predetermined criteria related to the possibility of the vehicle behind overtaking safely, and generating an assistance signal which indicates the result of the analysis,
- sending the assistance signal to said vehicle behind, thereby conveying to the driver of the vehicle behind the result of the analysis,
- generating on the basis of said analysis one or more control signals which indicate how one or more of the vehicle train's vehicles need to be regulated to make it possible for said vehicle behind to overtake the vehicle train, and
- sending said one or more control signals to one or more control systems of said vehicles in the vehicle train, which vehicle or vehicles are then regulated accordingly.

2. A system according to claim 1, in which said processor unit is adapted to generating one or more control signals which indicate how one or more of the train's vehicles need to be regulated to make space between two of its vehicles for said vehicle behind.

3. A system according to any one of the above claims, in which said processor unit is adapted to generating an assistance signal which also indicates an identity of the vehicle train.

4. A system according to any one of the above claims, in which said overtake signal also indicates an identity of the vehicle behind.

5. A system according to any one of the above claims, in which the processor unit is also adapted to determining a period of time t during which overtaking is assessed as being safe, in which case the assistance signal also states said period t.

6. A method for assisting a vehicle behind when overtaking a vehicle train comprising at least two vehicles travelling close together, which vehicle behind and at least a leader vehicle in the vehicle train are adapted to communicating via wireless communication, comprising the steps of
- indicating (A) that a vehicle behind wishes to overtake the vehicle train,
- receiving indications (B) that said vehicle behind wishes to overtake said vehicle train,
- receiving information (C) about the presence of objects around the leader vehicle which relate to the traffic situation,
- analysing (D) said presence of objects with respect to predetermined criteria related to the possibility of the vehicle behind overtaking safely,
- sending (E) the result of the analysis to said vehicle behind, thereby conveying the result to its driver,
- regulating (F) one or more of the vehicle train's vehicles on the basis of the result of said analysis to make it possible for said vehicle behind to overtake the vehicle train.

7. A method according to claim 6, which comprises regulating one or more vehicles in the vehicle train to make space between two of its vehicles for said vehicle behind.

8. A method according to either of claims 6 and 7, which comprises identifying the vehicle train for said vehicle behind.

9. A method according to any one of claims 6-8, which comprises identifying the vehicle behind for said vehicle train.

10. A method according to any one of claims 6 to 9, comprising determining a period of time t during which overtaking is assessed as being safe, which period t is conveyed to the driver.

11. A computer programme product comprising computer programme instructions for enabling a computer system to perform steps of the method according to any one of claims 6 to 10 when the programme instructions are run on said computer system.

12. A computer programme product according to claim 11, in which the programme instructions are stored on a medium which can be read by a computer system.

## Patentansprüche

1. System zur Unterstützung eines hinteren Fahrzeugs beim Überholen eines Fahrzeugverbunds aus wenigstens zwei nahe beieinander fahrenden Fahrzeugen, wobei das hintere Fahrzeug und wenigstens ein Führungsfahrzeug in dem Verbund dazu eingerichtet sind, über Drahtloskommunikation zu kommunizieren, wobei das System eine Verarbeitungseinheit aufweist, die eingerichtet ist zum
- Empfangen eines Überholsignals von dem hinteren Fahrzeug, welches anzeigt, dass das hintere Fahrzeug den Fahrzeugverbund überholen will,
- Empfangen eines Überwachungssignals von einem bordseitigen Überwachungssystem des Führungsfahrzeugs, welches das Vorhandensein von die Verkehrssituation betreffenden Objekten um das Führungsfahrzeug herum angibt,
- Analysieren des Vorhandenseins von Objekten hinsichtlich vorbestimmter Kriterien, welche die Möglichkeit eines sicheren Überholens des hinteren Fahrzeugs betreffen, und Erzeugen eines Unterstützungssignals, welches das Resultat der Analyse angibt,
- Senden des Unterstützungssignals zu dem hinteren Fahrzeug, wodurch dem Fahrer des hinteren Fahrzeugs das Resultat der Analyse mitgeteilt wird,
- Erzeugen eines oder mehrerer Steuersignale auf der Basis der Analyse, die angeben, wie eines oder mehrere der Fahrzeuge des Fahrzeugverbunds geregelt werden müssen, um es dem hinteren Fahrzeug zu ermöglichen, den Fahrzeugverbund zu überholen, und
- Senden des einen oder der mehreren Steuersignale an eines oder mehrere Steuersysteme der Fahrzeuge in dem Fahrzeugverbund, wodurch das Fahrzeug oder die Fahrzeuge dann entsprechend geregelt werden.

2. System nach Anspruch 1, bei dem die Verarbeitungseinheit dazu eingerichtet ist, ein oder mehrere Steuersignale zu erzeugen, die angeben, wie ein oder mehrere Fahrzeuge des Fahrzeugverbunds geregelt werden müssen, um zwischen zwei seiner Fahrzeuge Platz für das hintere Fahrzeug zu schaffen.

3. System nach einem der vorhergehenden Ansprüche, bei dem die Verarbeitungseinheit dazu eingerichtet ist, ein Unterstützungssignal zu erzeugen, welches auch eine Identität des Fahrzeugverbunds angibt.

4. System nach einem der vorhergehenden Ansprüche, bei dem das Überholsignal auch eine Identität des hinteren Fahrzeugs angibt.

5. System nach einem der vorhergehenden Ansprüche, bei dem die Verarbeitungseinheit ferner dazu eingerichtet ist, eine Zeitdauer (t) zu ermitteln, während derer ein Überholen als sicher eingestuft wird, in welchem Fall das Unterstützungssignal auch die Dauer (t) angibt.

6. Verfahren zur Unterstützung eines hinteren Fahrzeugs beim Überholen eines Fahrzeugverbunds aus wenigstens zwei nahe beieinander fahrenden Fahrzeugen, wobei das hintere Fahrzeug und wenigstens ein Führungsfahrzeug in dem Fahrzeugverbund dazu eingerichtet sind, über Drahtloskommunikation zu kommunizieren, umfassend die Schritte
- Anzeigen (A), dass ein hinteres Fahrzeug den Fahrzeugverbund überholen will,
- Empfangen von Hinweisen (B), dass das hintere Fahrzeug den Fahrzeugverbund überholen will,
- Empfangen von Information (C) über das Vorhandensein von Objekten um das Führungsfahrzeug herum, die die Verkehrssituation betreffen,
- Analysieren (D) des Vorhandenseins von Objekten hinsichtlich vorbestimmter Kriterien, welche die Möglichkeit eines sicheren Überholens des hinteren Fahrzeugs betreffen,
- Senden (E) des Resultats der Analyse an das hintere Fahrzeug, wodurch das Resultat seinem Fahrer mitgeteilt wird,
- Regeln (F) eines oder mehrerer der Fahrzeuge des Fahrzeugverbunds basierend auf dem Resultat der Analyse, um es dem hinteren Fahrzeug zu ermöglichen, den Fahrzeugverbund zu überholen.

7. Verfahren nach Anspruch 6, umfassend ein Regeln eines oder mehrerer Fahrzeug in dem Fahrzeugverbund dahingehend, zwischen zwei seiner Fahrzeuge Platz für das hintere Fahrzeug zu schaffen.

8. Verfahren nach Anspruch 6 oder 7, umfassend ein Identifizieren des Fahrzeugverbunds gegenüber dem hinteren Fahrzeug.

9. Verfahren nach einem der Ansprüche 6 bis 8, umfassend ein Identifizieren des hinteren Fahrzeugs gegenüber dem Fahrzeugverbund.

10. Verfahren nach einem der Ansprüche 6 bis 9, umfassend ein Ermitteln einer Zeitdauer (t), während derer ein Überholen als sicher eingestuft wird, wobei die Dauer (t) dem Fahrer mitgeteilt wird.

11. Computerprogrammprodukt mit Computerprogrammanweisungen, um ein Computersystem in die Lage zu versetzen, Schritte des Verfahrens nach einem der Ansprüche 6 bis 10 durchzuführen, wenn die Programmanweisungen auf dem Computersystem ausgeführt werden.

12. Computerprogrammprodukt nach Anspruch 11, in dem die Programmanweisungen auf einem Medium gespeichert sind, das von einem Computersystem gelesen werden kann.

## Revendications

1. Système d'assistance à un véhicule derrière lors d'un dépassement d'un train de véhicules comprenant au moins deux véhicules se déplaçant en étant proches l'un de l'autre, le véhicule derrière et au moins un véhicule de tête dans le train étant adaptés pour la communication via une communication sans fil, lequel système comprend une unité de processeur adaptée pour
- la réception à partir dudit véhicule derrière d'un signal de dépassement qui indique que le véhicule derrière souhaite dépasser le train de véhicules,
- la réception à partir d'un système de surveillance à bord du véhicule de tête d'un signal de surveillance qui indique la présence d'objets autour du véhicule de tête liés à la situation du trafic,
- l'analyse de ladite présence d'objets par rapport à des critères prédéterminés liés à la possibilité de dépassement en sécurité du véhicule derrière, et la génération d'un signal d'assistance qui indique le résultat de l'analyse,
- l'envoi du signal d'assistance audit véhicule derrière, acheminant ainsi au conducteur du véhicule derrière le résultat de l'analyse,
- la génération sur base de ladite analyse d'un ou plusieurs signaux de commande qui indiquent comment un ou plusieurs des véhicules du train de véhicules doivent être régulés pour rendre possible audit véhicule derrière de dépasser le train de véhicules, et
- l'envoi desdits un ou plusieurs signaux de commande à un ou plusieurs systèmes de commande desdits véhicules dans le train de véhicules, lequel véhicule ou lesquels véhicules sont ensuite régulés en conséquence.

2. Système selon la revendication 1, dans lequel ladite unité de processeur est adaptée pour la génération d'un ou plusieurs signaux de commande qui indiquent comment un ou plusieurs véhicules du train doivent être régulés pour créer un espace entre deux de ses véhicules pour ledit véhicule derrière.

3. Système selon l'une quelconque des revendications précédentes, dans lequel ladite unité de processeur est adaptée pour la génération d'un signal d'assistance qui indique également une identité du train de véhicules.

4. Système selon l'une quelconque des revendications précédentes, dans lequel ledit signal de dépassement indique également une identité du véhicule derrière.

5. Système selon l'une quelconque des revendications précédentes, dans lequel l'unité de processeur est également adaptée à la détermination d'une période de temps t durant laquelle le dépassement est évalué comme étant sûr, auquel cas le signal d'assistance indique également ladite période t.

6. Procédé pour l'assistance à un véhicule derrière lors d'un dépassement d'un train de véhicules comprenant au moins deux véhicules se déplaçant en étant proches l'un de l'autre, lesquels véhicule derrière et au moins un véhicule de tête dans le train sont adaptés pour la communication via une communication sans fil, comprenant les étapes de
- l'indication (A) qu'un véhicule derrière souhaite dépasser le train de véhicules,
- la réception d'indications (B) que le véhicule derrière souhaite dépasser ledit train de véhicules,
- la réception d'informations (C) sur la présence d'objets autour du véhicule de tête qui sont liés à la situation du trafic,
- l'analyse (D) de ladite présence d'objets par rapport à des critères prédéterminés liés à la possibilité de dépassement en sécurité du véhicule derrière,
- l'envoi (E) du résultat de l'analyse audit véhicule derrière, acheminant ainsi le résultat à son conducteur,
- la régulation (F) d'un ou plusieurs véhicules du train de véhicules sur base du résultat de ladite analyse pour rendre possible audit véhicule derrière de dépasser le train de véhicules.

7. Procédé selon la revendication 6, qui comprend la régulation d'un ou plusieurs véhicules dans le train de véhicules pour créer un espace entre deux de ses véhicules pour ledit véhicule derrière.

8. Procédé selon l'une quelconque des revendications 6 et 7, qui comprend l'identification du train de véhicules pour ledit véhicule derrière.

9. Procédé selon l'une quelconque des revendications 6-8, qui comprend l'identification du véhicule derrière pour ledit train de véhicules.

10. Procédé selon l'une quelconque des revendications 6 à 9, comprenant la détermination d'une période de temps t durant laquelle le dépassement est évalué comme étant sûr, laquelle période t est acheminée au conducteur.

11. Produit de programme informatique comprenant des instructions de programme informatique pour permettre à un système informatique d'exécuter des étapes du procédé selon l'une quelconque des revendications 6 à 10 lorsque les instructions de programme sont exécutées sur ledit système informatique.

12. Produit de programme informatique selon la revendication 11, dans lequel les instructions de programme sont stockées sur un support qui peut être lu par un système informatique.
